# EUROPÄISCHE PATENTSCHRIFT

(11) **EP 1 270 750 B1**
(45) Veröffentlichungstag und Bekanntmachung des Hinweises auf die Patenterteilung: **27.07.2005**
(21) Anmeldenummer: 02012185.1
(22) Anmeldetag: 31.05.2002
(51) Int. Cl.: C22B 1/24, B01J 2/14

(54) **Pelletiereinrichtung zur Herstellung eines sphärischen Schüttgutes**
Pelletising apparatus for producing spherical bulk material
Dispositif pour la préparation de matière sphérique en vrac

(30) Priorität: 01.06.2001 DE 10126770
(43) Veröffentlichungstag der Anmeldung: 02.01.2003
(73) Patentinhaber: Glatt Systemtechnik GmbH, 01277 Dresden (DE)
(72) Erfinder: Cornelius, Hans-Dieter, 01217 Dresden (DE); Fritzsche, Wolfgang, 01465 Dresden (DE); Bretschneider, Frank, Dr.-Ing., 01465 Liegau-Augustusbad (DE)
(74) Vertreter: Pätzelt, Peter, Dipl.-Ing.

(56) Entgegenhaltungen:
- WO-A-00/62916
- DE-A- 1 667 038
- GB-A- 654 246

## Beschreibung

Die Erfindung betrifft eine Pelletiereinrichtung zur Herstellung eines sphärischen Schüttgutes. Insbesondere betrifft die Erfindung eine Pelletiereinrichtung, die als Durchlaufanlage eingesetzt werden kann. Pelletiereinrichtungen bestehen im Wesentlichen aus einem zylindrischen Gehäuse, einem zentrisch im Gehäuse gelagerten Rotorteller und einer Auslassöffnung. Zwischen dem Rotorteller und der Wandung des Gehäuses befindet sich zwangsweise ein Spalt. Damit dieser Spalt frei bleibt, wird von unten ein Luftstrom als Sperrluft hindurch geleitet.

Nach dem Stand der Technik sind verschiedenartige Pelletiereinrichtungen bekannt, die einen horizontalen Rotorteller mit vertikaler Achse aufweisen. Das Ausgangsmaterial der herzustellenden sphärischen Pellets wird z. B. in Form einer Vielzahl pastöser Stränge (spagettiartig) in die Pelletiereinrichtung eingebracht. Beim Einbringen des Ausgangsmaterials in die Pelletiereinrichtung zerbrechen die Stränge in eine Vielzahl von Einzelstücke, die in eine radial nach außen gerichtete schraubenförmige Umwälzbewegung versetzt werden.

Je nach der vorliegenden Struktur und Feuchtigkeit des Ausgangsmaterials werden die pastösen Stränge in etwa gleich große Teile zerrissen, wobei in der Praxis meist ein Verhältnis von Länge zu Durchmesser gleich 1 : 1 angestrebt wird.

In der Folge werden die kleinen zylinderförmigen Teile durch die Umwälzbewegung verrundet und in sphärische Teilchen umgeformt. Der Grad der Verrundung ist im Wesentlichen von der Konsistenz der Einzelstücke, den Umwälzbedingungen und der mittleren Verweildauer innerhalb der Pelletiereinrichtung abhängig.

Die Umwälzbedingungen werden dabei insbesondere von der Füllmenge, den Kräften, die innerhalb des Umwälzprozesses auf die Einzelstücke einwirken, und auch von dem Luftstrom zwischen dem Rotorteller und dem Gehäuse bestimmt.

Im Ergebnis bildet sich eine Ringwulst aus umwälzenden Teilchen mit einer spezifischen Höhe aus, die in der Praxis etwa zwischen 8 bis 15 cm liegt. Bei einem zähen und feuchten Material muss die Ringwulst meist flacher eingestellt werden als bei trockeneren Materialien.

Die Ringwulst ist visuell gut zu beobachten und der Bediener der Einrichtung weiß aus Erfahrung, wie hoch die sphärischen Teilchen an der Wand aufsteigen müssen, damit diese Charge als fertiges sphärisches Schüttgut der Einrichtung entnommen werden kann. Zur Entnahme des sphärisches Schüttgutes ist z. B. innerhalb der Wand des Gehäuses eine verschließbare Öffnung vorhanden. Diese wird geöffnet und das sphärische Schüttgut verlässt unter dem Einfluss der Fliehkraft das Gehäuse.

Nachteilig ist dabei, dass dem Bediener eine relativ hohe subjektiv beeinflusste Verantwortung bei der Entscheidung über den Grad der Rundheit des Schüttgutes obliegt. Belässt er das Gut zu kurz in der Pelletiereinrichtung, ist die Rundheit des fertigen Schüttgutes nicht ausreichend und belässt er das Schüttgut zu lange in der Pelletiereinrichtung können die Einzelteilchen zu unerwünschten größeren Elementen aufrollen und es ist mit einer nachteiligen Verlängerung des Produktionsprozesses verbunden. Ein weiterer Nachteil des Standes der Technik besteht darin, dass die bekannten Pelletiereinrichtungen nur im Batchbetrieb, nicht aber im kontinuierlichen Prozess eingesetzt werden können.

Der Erfindung liegt damit als Aufgabe zugrunde, eine Einrichtung zur Herstellung eines sphärischen Schüttgutes der eingangs genannten Art anzugeben, mit der der Pelletierprozess automatisiert werden kann. Die Aufgabe der Erfindung besteht insbesondere auch darin, dass die Einrichtung im kontinuierlichen Prozess eingesetzt werden kann.

Die Erfindung löst die Aufgabe durch die im kennzeichnenden Teil des Anspruchs 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Der Kern der Erfindung besteht in einer Pelletiereinrichtung, bei der als Auslassöffnung ein vertikal stufenlos verstellbarer Schieber vorhanden ist. Der Schieber ist Teil der Wandung des zylindrischen Gehäuses der Pelletiereinrichtung und wird als Segment im Wesentlichen kanten- und spaltfrei in dieser geführt.

Nach Anspruch 2 kann die Oberkante der Pelletiereinrichtung mittels einer kraftgetriebenen Hubeinrichtung verstellt werden. In welcher Form der Kraftantrieb der Hubeinrichtung erfolgt, ist von den jeweiligen Gegebenheiten abhängig. Je nachdem, welche Antriebsmedien an der Gesamteinrichtung vorhanden sind, kann der Fachmann auch den Kraftantrieb auslegen. Praktisch relevant sind Hubeinrichtungen mit elektromotorischem, pneumatischem oder hydraulischem Antrieb. Der Schieber kann, insbesondere auch nach einem Produktwechsel, direkt vom Bedienstand der Pelletiereinrichtung aus in geeigneter Weise positioniert werden.

Bei der Nutzung der Pelletiereinrichtung im Chargenbetrieb kann der Schieber als Auslassöffnung durch den Bediener oder automatisch nach einer bestimmten Verweilzeit abgesenkt werden, wodurch das Schüttgut auf Grund von Fliehkräften, die im Umwälzprozess auf das Schüttgut einwirken, durch die Auslassöffnung aus der Pelletiereinrichtung ausgetragen werden.

Die erfindungsgemäße Einrichtung kann in vorteilhafter Weise auch in einem kontinuierlichen Herstellungsprozess eingesetzt werden. Dabei ist die Oberkante des Schiebers gegenüber der Oberkante des Gehäuses abgesenkt und fertiges Schüttgut verlässt die Pelletiereinrichtung über die Oberkante des Schiebers in dem Maß, wie neues Ausgangsmaterial in die Pelletiereinrichtung eingefüllt wird.

Abgestimmt auf das konkrete Schüttgut, d.h. auf dessen spezifische Feuchtigkeit, Größe und Masse, wird die Höhe der Oberkante des Schiebers auf ein spezifisches Maß eingestellt. Zur Bestimmung dieses Maßes wird empirisch eine mittlere Verweildauer ermittelt, mit der die spezifischen Schüttgutteilchen in der Pelletiereinrichtung verbleiben müssen, damit ein durchschnittlich ausreichend verrundetes Schüttgut erzielt wird. Die Höhe der Oberkante des Schiebers entspricht der praktisch erforderlichen Höhe der Ringwulst des umwälzenden Schüttgutes. D.h. die Oberkante des Schiebers wird auf die spezifisch festgelegte Höhe der Ringwulst eingestellt.

Auf dieser Grundlage wird in einer konkreten Zeiteinheit eine bestimmte Menge des Ausgangsmaterials kontinuierlich in die Pelletiereinrichtung eingebracht und eine gleiche Menge verlässt als fertiges Schüttgut die Pelletiereinrichtung über die Oberkante des Schiebers. Die zugeführte Menge und die Füllmenge bestimmen die mittlere Verweildauer des Ausgangsmaterials bzw. Schüttgutes in der Pelletiereinrichtung.

Mittels einer Optimierung der durchschnittlichen Verweildauer wird die Prozessdauer insgesamt maximal reduziert. Der subjektive Einfluss des Bedieners auf die Verfahrenskosten wird weitgehend ausgeschlossen.

Mindestens zwei derartige Pelletiereinrichtungen können nach Anspruch 3 in vorteilhafter Weise auch kaskadenartig hintereinander angeordnet sein. Damit kann die Produktivität bei Senkung der mittleren Verweildauer in der einzelnen Pelletiereinrichtung stark erhöht werden. In der ersten Pelletiereinrichtung wird das Ausgangsmaterial dabei z.B. nur grob gerundet und in der zweiten Pelletiereinrichtung wird das fertige sphärische Schüttgut hergestellt.

Der Prozess des Verrundens des Ausgangsmaterials ist wesentlich effektiver, da in die zweite oder gegebenenfalls eine dritte Pelletiereinrichtung bereits teilweise verrundetes Schüttgut eingebracht wird und somit der weitere Verrundungsprozess verkürzt werden kann.

Die erfindungsgemäße Einrichtung ist auch vorteilhaft zur Pelletierung von sensiblen Ausgangsmaterialien einsetzbar, wenn zur Vermeidung eines Austritts der Ausgangsmaterialien in die Umgebung geschlossene Pelletiereinrichtungen verwendet werden müssen.

Die Erfindung wird nachstehend an einem Ausführungsbeispiel näher erläutert werden.

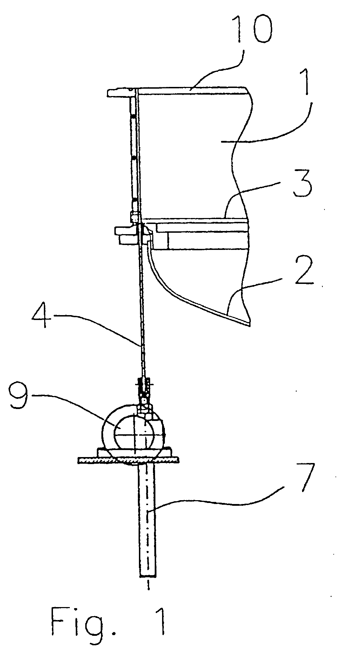

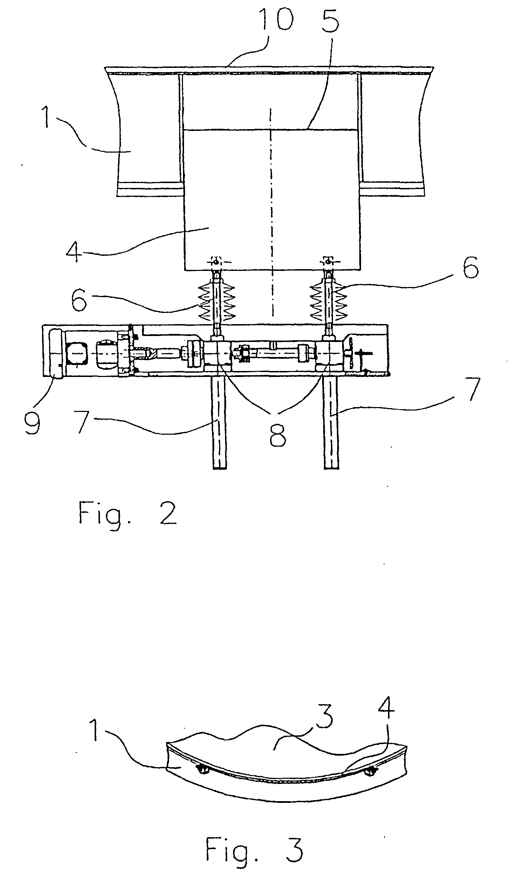

Die Zeichnung zeigt eine erfindungsgemäße Einrichtung zur Herstellung eines sphärischen Schüttgutes. Figur 1 zeigt einen Schnitt durch die Wandung der Pelletiereinrichtung im Bereich des erfindungsgemäßen Schiebers mit einem kraftgetriebenen Antrieb des Schiebers. Figur 2 zeigt eine Vorderansicht auf den Schieber von außen. Figur 3 zeigt den Schnitt A-A in Figur 2.

Entsprechend Figur 1 besteht die Pelletiereinrichtung aus einem zylindrischen Gehäuse 1 mit einem unteren Gehäuseboden 2 und einer Oberkante 10. In der Höhe des unteren Endes des Gehäuses 1 befindet sich ein Rotorteller 3, der um eine zentrische vertikale Achse rotiert.

Die vorliegende Erfindung ist im Ausführungsbeispiel durch den Schieber 4 realisiert, der eine Oberkante 5 aufweist. In Figur 1 ist der Schieber 4 in der untersten Stellung dargestellt, in der die Pelletiereinrichtung völlig entleert werden kann. In Figur 2 ist der Schieber 4 in der Arbeitsstellung, d.h. in einer mittleren Position, dargestellt. Wie nachfolgend noch weiter ausgeführt wird, befindet sich die Oberkante 5 im Ausführungsbeispiel auf einer Höhe von 150 mm.

In Figur 3 ist dargestellt, wie der Schieber 4 im Gehäuse 1 spalt- und kantenfrei geführt ist und die gleiche innere Form aufweist wie das Gehäuse 1. Der Schieber 4 ist damit ein Segment der zylindrischen Wandung des Gehäuses 1. Unterhalb des Schiebers 4 befindet sich eine elektromotorisch angetriebene Hubeinrichtung. Der Schieber 4 ist dabei über zwei Hubstangen 6 an die Hubeinrichtung angelenkt, die in Stangenhülsen 7 gelagert und geführt werden. Über Schneckengetriebe 8 sind die Hubstangen 6 mit einem Elektromotor 9 verbunden. Der Elektromotor 9 kann über eine in der Zeichnung nicht dargestellte Regeleinrichtung gesteuert werden.

Im Ausführungsbeispiel beträgt der Innendurchmesser des Gehäuses 1400 mm und die Höhe des Gehäuses 300 mm. Die Drehzahl des Rotorstellers 3 ist im Bereich von 0 bis 350 Umdrehungen/min regelbar. Der Schieber 4 ist im Wesentlichen über die gesamte Höhe der zylindrischen Wandung des Gehäuses 1 verstellbar.

Die Pelletiereinrichtung wird im Ausführungsbeispiel als Durchlaufanlage eingesetzt. Die Oberkante 5 des Schiebers 4 wird auf eine Höhe von 150 mm eingestellt. Das zu pillierende Gut wird direkt aus einem Extruder, der das Gut strangförmig ausbildet, von oben in die Pelletiereinrichtung eingebracht. Dabei wird das Gut derart vorbehandelt, dass es beim Einfallen in die Einrichtung und beim Auftreffen auf den rotierenden Rotorteller 3 im Wesentlichen in kleine zylinderförmige Teilchen im Verhältnis Länge zu Durchmesser von 1 : 1 zerbricht. Die Menge der in der Zeiteinheit in die Pilliereinrichtung einzubringenden Teilchen, damit eine vorbestimmte mittlere Verweilzeit der Teilchen innerhalb der Pelletiereinrichtung erzielt wird, ergibt sich aus der Füllmenge, die bei den gegebenen Bedingungen zu einer Ringwulst von 150 mm Höhe führt. Diese Füllmenge wird dann innerhalb einer Zeit, die der festgelegten mittleren Verweilzeit entspricht, gleichmäßig in die Pelletiereinrichtung eingefüllt.

In der Folge werden die Teilchen des eingebrachten Gutes durch den Rotorteller 3 in eine Umwälzung versetzt. Die Umfangsgeschwindigkeit des Rotortellers 3 liegt im Bereich von 20 m/s. Bei der Umwälzung bildet sich an der Wandung des Gehäuses 1 die bereits beschriebene Ringwulst aus. Entsprechend der Menge neuer Teilchen, die in die Pelletiereinrichtung eingebracht werden, erhöht sich die Ringwulst und die Teilchen, die über die eingestellte Höhe der Oberkante 5 des Schiebers 4 rollen, verlassen die Pelletiereinrichtung unter dem Einfluss der Fliehkraft.

Die erforderliche mittlere Verweildauer, d.h. die Dauer des Verrundungsprozesses, wird maßgeblich vom Energieeintrag auf die zylinderförmigen Teile bestimmt. Dabei sind der Reibungskoeffizient des Gutes, der Reibungskoeffizient der Rotorscheibe, die Geschwindigkeit der Rotorscheibe unter der Ringwulst und die Flächenpressung der Ringwulst auf der Rotorscheibe, welche von der Füllmenge bestimmt wird, von besonderer Bedeutung.

Wenn drei der beschriebenen Pelletiereinrichtungen in Reihe hintereinander geschaltet werden und im kontinuierlichen Durchlauf betrieben werden, können die jeweiligen Schieber 4 der einzelnen Pelletiereinrichtung auf spezifisch unterschiedliche Höhen eingestellt werden. Damit wird in jeder der drei Pelletiereinrichtungen ein bestimmter Verrundungsgrad erreicht, bis ein gutes sphärisches Produkt die dritte Pelletiereinrichtung verlässt. Mit einer derartigen Kaskadenanordnung von drei Pelletiereinrichtungen wird ein besonders hoher Produkt-Durchsatz bei einem sehr guten Endprodukt erzielt.

Die erfindungsgemäße Pelletiereinrichtung, als einzelne Einrichtung wie auch die vorstehend beschriebene Kaskadenanordnung, kann nach Anspruch 4 gegenüber der Umgebung auch hermetisch abgeschlossen werden. Damit sind die Einrichtungen sehr vorteilhaft zum Pelletieren von sensiblen oder toxischen Produkten anwendbar.

## Patentansprüche

1. Pelletiereinrichtung zur Herstellung eines sphärischen Schüttgutes mit einem Gehäuse (1), einem Rotorteller (3), der mit vertikaler Achse zentrisch im Gehäuse (1) gelagert ist, und einer Auslassöffnung, **dadurch gekennzeichnet, dass** als Auslassöffnung ein vertikal stufenlos verstellbarer Schieber (4) vorhanden ist, der Teil der Wandung des Gehäuses (1) ist und dessen Oberkante (5) als horizontale Überlaufkante ausgebildet ist.

2. Pelletiereinrichtung nach Anspruch 1, **dadurch gekennzeichnet, dass** zum vertikalen Verstellen des Schiebers (4) eine kraftgetriebene Hubeinrichtung vorhanden ist.

3. Pelletiereinrichtung nach Anspruch 1, **dadurch gekennzeichnet, dass** mindestens zwei Pelletiereinrichtungen hintereinander angeordnet sind, derart, dass das Schüttgut, welches über die Überlaufkante aus der ersten Pelletiereinrichtung austritt, unmittelbar in die zweite Pelletiereinrichtung eintritt.

4. Pelletiereinrichtung nach einem der Ansprüche 1 bis 3, **dadurch gekennzeichnet, dass** die Pelletiereinrichtung gegenüber der Umgebung hermetisch abgeschlossen ist.

## Claims

1. Pelletizing apparatus for producing spherical bulk material, having a housing (1), a rotor plate (3), which is mounted with a vertical axis centrally in the housing (1), and an outlet opening, **characterized in that**, as outlet opening, there is a slide (4) which is infinitely adjustable vertically and is part of the wall of the housing (1) and whose top edge (5) is designed as a horizontal overflow edge.

2. Pelletizing apparatus according to Claim 1, **characterized in that** there is a power-operated lifting device for the vertical adjustment of the slide (4).

3. Pelletizing apparatus according to Claim 1, **characterized in that** at least two pelletizing apparatuses are arranged one behind the other in such a way that the bulk material which discharges from the first pelletizing apparatus via the overflow edge enters the second pelletizing apparatus directly.

4. Pelletizing apparatus according to one of Claims 1 to 3, **characterized in that** the pelletizing apparatus is hermetically sealed off from the environment.

## Revendications

1. Dispositif de granulation pour la production d'un produit en vrac de forme sphérique, comprenant un boîtier (1), un disque de rotor (3), qui est supporté avec son axe vertical centralement dans le boîtier (1), et une ouverture de sortie, **caractérisé en ce que** l'on prévoit comme ouverture de sortie un tiroir (4) réglable verticalement en continu, qui fait partie de la paroi du boîtier (1) et dont le bord supérieur (5) est réalisé sous forme de bord de débordement horizontal.

2. Dispositif de granulation selon la revendication 1, **caractérisé en ce qu'**un dispositif de levage entraîné par force est prévu pour le réglage vertical du tiroir (4).

3. Dispositif de granulation selon la revendication 1, **caractérisé en ce qu'**au moins deux dispositifs de granulation sont disposés l'un derrière l'autre, de telle sorte que le produit en vrac, qui sort par le bord de débordement hors du premier dispositif de granulation, pénètre directement dans le deuxième dispositif de granulation.

4. Dispositif de granulation selon l'une quelconque des revendications 1 à 3, **caractérisé en ce que** le dispositif de granulation est fermé hermétiquement vis-à-vis de l'environnement.
